# EUROPÄISCHE PATENTSCHRIFT

(11) **EP 1 782 137 B1**
(45) Veröffentlichungstag und Bekanntmachung des Hinweises auf die Patenterteilung: **26.12.2007**
(21) Anmeldenummer: 05774949.1
(22) Anmeldetag: 23.08.2005
(51) Int. Cl.: G05B 17/00, G05D 27/00, C02F 3/00

(54) **VERFAHREN UND ANORDNUNG ZUR ONLINE-REGELUNG EINES BATCH-PROZESSES IN EINEM BIOREAKTOR**
METHOD AND ARRANGEMENT FOR THE ONLINE REGULATION OF A BATCH PROCESS IN A BIOREACTOR
PROCEDE ET ENSEMBLE POUR LA REGULATION EN LIGNE D'UN PROCEDE DISCONTINU DANS UN BIOREACTEUR

(30) Priorität: 23.08.2004 DE 102004040774
(43) Veröffentlichungstag der Anmeldung: 09.05.2007
(73) Patentinhaber: SIEMENS AKTIENGESELLSCHAFT, 80333 München (DE)
(72) Erfinder: GRIEB, Herbert, 76316 Malsch (DE); KIRCHBERG, Karl-Heinz, 76149 Karlsruhe (DE); LINZENKIRCHNER, Edmund, 76344 Eggenstein-Leopoldshafen (DE); MAES, Ingrid, BE-4827 HH Breda (BE); PFEIFFER, Bernd-Markus, 76744 Wörth (DE)
(86) Internationale Anmeldenummer: PCT/EP2005/009107
(87) Internationale Veröffentlichungsnummer: WO 2006/021427

(56) Entgegenhaltungen:
- DE-C1- 19 653 530
- NAVRATIL M ET AL: "On-line multi-analyzer monitoring of biomass, glucose and acetate for growth rate control of a Vibrio cholerae fed-batch cultivation" JOURNAL OF BIOTECHNOLOGY, ELSEVIER SCIENCE PUBLISHERS, AMSTERDAM, NL, Bd. 115, Nr. 1, 12. Januar 2005 (2005-01-12), Seiten 67-79, XP004966990 ISSN: 0168-1656
- RICHARD ESCOTT: "Process Monitoring and Control - A Collaborative CPACT Project" CPACT NEWS, Nr. 4, 2002, XP002354310 in der Anmeldung erwähnt
- JOHNSON H. E. ET AL: "High-Throughput Metabolic Fingerprinting of Legume Silage Fermentations via Fourier Transform Infrared Spectroscopy and Chemometrics" APPLIED AND ENVIRONMENTAL MICROBIOLOGY, Bd. 70, Nr. 3, März 2004 (2004-03), Seiten 1583-1592, XP002354311 in der Anmeldung erwähnt
- JORGENSEN ET AL: "On-line batch fermentation process monitoring (NIR)-introducing 'biological process time'" JOURNAL OF CHEMOMETRICS, Nr. 18, 2004, Seiten 1-11, XP002354312 Published online in Wiley InterScience (www.interscience.wiley.com). DOI: 10.1002/cem850 in der Anmeldung erwähnt

## Beschreibung

In der Life Science Industrie (Pharma, Agro, Food) werden viele Produkte in Bioreaktoren, z. B. Fermentern, im Batch-Prozess, d. h. chargenweise, hergestellt. Dabei werden in dem Bioreaktor lebende Mikroorganismen durch geeignete Umgebungsbedingungen, wie optimale Temperatur, pH-Wert und Zufuhr von Rohstoffen und ggf. Sauerstoff, dazu gebracht, das gewünschte Produkt in der gewünschten Qualität zu produzieren. Bisher werden diese Umgebungsbedingungen soweit möglich im Reaktor gemessen und mit konventionellen Regel- oder Steuereinrichtungen auf vorgegebene Erfahrungswerte geregelt bzw. eingestellt. Am Ende des Batch-Prozesses wird das erzeugte Produkt zeitaufwendig im Labor untersucht und je nach Qualität zur Weiterverwendung freigegeben oder als Ausschuss entsorgt. Da die Produktqualität während des laufenden Batch-Prozesses nicht direkt gemessen werden kann und die Mikroorganismen als Lebewesen starke Streuungen in Bezug auf ihren physiologischen Zustand und ihr Verhalten aufweisen, wird bisher viel Ausschuss produziert.

In CPACT News, Ausgabe Nr. 4, Frühjahr 2002, Seite 2, im Internet gefunden unter http://www.strath.ac.uk/Other/cpact/other/newsletter2002.pdf, wird unter der Überschrift "Process Monitoring and Control - A Collaborative CPACT Project" ein Verfahren zur Überwachung und Steuerung von Batch-Prozessen beschrieben, bei dem mehrere Prozessvariablen, wie Temperatur, Rührgeschwindigkeit und pH-Wert, gemessen werden, aus denen durch Anwendung der Technik der multivariaten statistischen Prozesskontrolle (MSPC = Multivariate Statistical Process Control) ein Fingerabdruck (fingerprint) des Batch-Prozesses in Form einer Trajektorie, also einer Prozessverlaufskurve, in einer multivariaten Kontrollkarte (multivariate control chart) erhalten wird. Durch Vergleich der Trajektorie des aktuellen Batch-Prozesses mit Trajektorien früherer gut oder aus bekannten Gründen schlecht verlaufener Batch-Prozesse kann der Verlauf des aktuellen Prozesses beurteilt werden und es kann nötigenfalls rechtzeitig korrigierend in den Prozess eingegriffen werden. Dabei liefern die multivariaten Kontrollkarten allerdings nur Anhaltspunkte für einen ggf. notwendigen Eingriff in den Prozess; wie der korrigierende Eingriff im Einzelnen erfolgen soll, ist nicht angegeben.

Aus Helen E. Johnson et al.: "High-Throughput Metabolic Fingerprinting of Legume Silage Fermentations via Fourier Transform Infrared Spectroscopy and Chemometrics" in Applied and Environmental Microbiology, Bd. 70, Nr. 3, März 2004, Seiten 1583-1592, im Internet gefunden unter http://dbk.ch.umist.ac.uk/Papers/applied&envirmicrobiol march 1583.pdf,
ist es bekannt, zur Ermittlung des Fingerabdrucks von durch anaerobe Fermentation produzierter Silage während des Batch-Prozesses Spektren im nahen oder mittleren Infrarotbereich aufzunehmen und die dabei erhaltene Datenmenge durch Anwendung der Hauptkomponentenanalyse (PCA = Principal Component Analysis) zu komprimieren. Bei der Hauptkomponentenanalyse erfolgt eine Transformation der hochdimensionalen Spektren in einen niedrigdimensionalen Hauptkomponentenraum, wobei möglichst wenig von der Varianz, d. h. dem Informationsgehalt, der Spektren verloren geht.

Aus Pia Jørgensen et al.: "On-line batch fermentation process monitoring (NIR)-introducing 'biological process time'" in Journal of Chemometrics, 2004, Nr. 18, Seiten 1-11, im Internet gefunden unter
http://www.acabs.dk/submenus/publications/Files/CEM8501.pdf, ist es bekannt, einen Batch-Prozess in einem Fermenter durch Aufnahme von Spektren im nahen Infrarotbereich ggf. in Verbindung mit zusätzlicher Fluoreszenzanalyse oder Massenspektroskopie online zu überwachen. Durch Anwendung von Partial Least Squares (PLS) Regression oder der Hauptkomponentenanalyse auf die Spektren werden Trajektorien in multivariaten Kontrollkarten erhalten, die durch Vergleich mit Trajektorien aus früheren Batch-Prozessen eine Online-Beurteilung des aktuellen Prozesses mit der Möglichkeit von Korrektureingriffen in den Prozess im Sinne der multivariaten statistischen Prozesskontrolle ermöglichen.

Die multivariate Analyse von Batch-Prozessen mittels NIR-Spektrometrie und Hauptkomponentenanalyse ist auch aus der Druckschrift "The Complete Multivariate Solution for PAT" der Firma Umetrics AB, am 09.06.2004 im Internet gefunden unter http://www.umetrics.com/pdfs/other/PAT 6psingle.pdf, bekannt. Auch hier werden nur online Informationen geliefert, die zeigen, ob der aktuelle Batch-Prozess normal verläuft oder von einem Normalverlauf abweicht. Im Falle eines nicht optimal verlaufenden Prozesses geben diese Informationen lediglich Anhaltspunkte für einen manuellen Eingriff in das Prozessgeschehen.

Aus der Siemens-Pressemitteilung "Siemens Process Automation Improves Biotech Production with New Analytical Technology" vom 27. Mai 2002, am 09.06.2004 im Internet gefunden unter http://www.siemens-industry.co.uk/news/pressrel.asp?ID=265, ist es dem Grundsatz nach bekannt, einen Fermentationsprozess in Abhängigkeit von dem über das Spektrum im nahen Infrarotbereich identifizierten Prozessverlauf online zu steuern. Als dazu in Frage kommende Software-Werkzeuge werden die Produkte "PathFinder", "INCA" und "Presto" der Firma IPCOS genannt. Die beiden erstgenannten Software-Werkzeuge ermöglichen es, einen Prozess entlang einer optimalen Trajektorie zu steuern, die über ein Prozessmodell ermittelt wird. "Presto" ist ein so genannter Soft(ware)sensor, der Messsignale, die nicht in einem direkten Zusammenhang zu einer gewünschten Prozessvariablen (Zielvariable) stehen, nutzt, um mittels eines komplexen mathematischen Modells die Zielvariable zu quantifizieren. Da der physiologische Zustand und das Verhalten von Mikroorganismen kaum vorhersagbar ist, lassen sich Bioprozesse jedoch kaum oder nur sehr schwer modellieren.

Der Erfindung liegt die Aufgabe zugrunde, eine Online-Regelung von Batch-Prozessen in einem Bioreaktor zu ermöglichen.

Gemäß der Erfindung wird die Aufgabe durch das in Anspruch 1 angegebene Verfahren und die in Anspruch 5 angegebene Anordnung gelöst.

Vorteilhafte Weiterbildungen des erfindungsgemäßen Verfahrens bzw. der erfindungsgemäßen Anordnung sind in den Unteransprüchen angegeben.

Erfindungsgemäß wird also durch eine spektrometrische Beobachtung des aktuellen Batch-Prozesses im nahen Infrarotbereich und Anwendung der Hauptkomponentenanalyse auf die aufgenommenen Spektren ein Fingerabdruck des Prozesses in Form einer Ist-Trajektorie im Hauptkomponentenraum ermittelt. Der zum gegenwärtigen Zeitpunkt aktuelle Messvektor der Ist-Trajektorie wird mit dem korrespondierenden Vektor einer Soll-Trajektorie verglichen, die einen in der Vergangenheit gut verlaufenen Batch-Prozess (golden batch) repräsentiert, so dass eine Abweichung des aktuellen Messvektors von dem korrespondierenden Vektor der Soll-Trajektorie auf einen ungünstigen Prozessverlauf hinweist. In Abhängigkeit von der ermittelten Abweichung wird online und automatisch ein Stelleingriff auf den Batch-Prozess vorgenommen, wobei aber sinnvollerweise ein die Soll-Trajektorie umgebender Korridor vorgesehen ist, innerhalb dessen eine Abweichung toleriert wird, ohne dass ein Stelleingriff erfolgt. Zur Ermittlung des durchzuführenden Stelleingriffs kann kein konventioneller, deterministischer Regler eingesetzt werden, weil kein reproduzierbarer Zusammenhang zwischen den zur Verfügung stehenden Stellgrößen, wie z. B. Temperatur, pH-Wert, Sauerstoffzufuhr und Rührgeschwindigkeit, und der Regelgröße, hier das NIR-Spektrum bzw. der daraus abgeleitete Fingerabdruck des Prozesses, bekannt ist. Dieser Zusammenhang ist vermutlich stark nichtlinear und im Verlauf des Batch-Prozesses zeitvariant. Es wird daher erfindungsgemäß zunächst versuchshalber ein Stelleingriff auf den Prozess durchgeführt und seine Wirkung anhand der resultierenden Änderung der Abweichung zwischen dem Messvektor und dem Vektor der Soll-Trajektorie beurteilt. Wenn sich durch diesen Stelleingriff eine Verbesserung ergeben hat, wird die Richtung, z. B. das Vorzeichen, des Stelleingriffs beibehalten; anderenfalls wird die Richtung geändert, z. B. umgekehrt. Führen die folgenden Stelleingriffe mit ggf. mehrfach geänderter Richtung zu keiner Verbesserung, kann der Batch-Prozess vorzeitig abgebrochen und die Charge verworfen werden.

Die Ermittlung der Richtung des Stelleingriffs erfolgt bevorzugt durch numerische Optimierung mittels eines lokalen Suchverfahrens, insbesondere des Hooke-Jeeves-Verfahrens. Dieses arbeitet nach dem Grundsatz Tasten und Voranschreiten. Es wird in jeder Richtung ein kleiner Tastschritt unternommen, dessen Verbesserung oder Verschlechterung als partielle Ableitung dient; anschließend erfolgt das Voranschreiten. Der Vorteil dieses Verfahrens ist, dass die Ableitung nicht bekannt sein muss.

Die Durchführung der ermittelten Stelleingriffe erfolgt mittels konventioneller Steuereinrichtungen in Form von offenen Steuerungen oder geschlossenen Regelkreisen zur Regelung bzw. Steuerung der Prozessvariablen, wie Temperatur, Sauerstoffzufuhr und/oder Rührgeschwindigkeit. Aufgrund der ermittelten Abweichung zwischen dem aktuellen Messvektor und dem korrespondierenden Vektor der Soll-Trajektorie kann somit ein einzelner Stelleingriff, z. B. Änderung der Temperatur, oder eine Kombination unterschiedlicher Stelleingriffe, z. B. Änderung der Temperatur und der Sauerstoffzufuhr, erfolgen. Die erforderlichen Stelleingriffe erfolgen während des gesamten Ablaufs des Batch-Prozesses für jeden der Aufnahmezeitpunkte des NIR-Spektrums, so dass sich daraus eine Online-Regelung des Batch-Prozesses ergibt. Voraussetzung ist natürlich, dass die Reaktion des Batch-Prozesses auf die Stelleingriffe im Vergleich zu seiner Gesamtdauer schnell ist.

Erweist sich der jeweils ausgeführte Stelleingriff als erfolgreich, kann er zur schnellen Reduzierung noch bestehender Abweichungen verstärkt werden. Dies geschieht vorzugsweise dadurch, dass bei von einem Zeitpunkt auf den anderen Zeitpunkt geringer werdender Abweichung die Stärke des Stelleingriffs in Abhängigkeit von der Änderungsgeschwindigkeit der Abweichung eingestellt wird.

Um eine laufende Optimierung der Online-Regelung zu erreichen, werden vorzugsweise Sequenzen von erfolgreichen, also zu einer Verringerung der Abweichung führenden Stelleingriffen zusammen mit den zugehörigen Messvektoren gespeichert; während des aktuellen Batch-Prozesses werden die erzeugten Messvektoren auf Übereinstimmung mit denen der abgespeicherten Sequenzen untersucht und in Abhängigkeit davon Startwerte für die Richtung des aktuell erforderlichen Stelleingriffs ermittelt. Erfolgreich verlaufene Eingriffe in den Prozess werden auf diese Weise gelernt und in vergleichbaren Situationen angewendet.

Zur weiteren Erläuterung der Erfindung wird im Folgenden auf die Figuren der Zeichnung Bezug genommen; im Einzelnen zeigen:
- Figur 1: ein vereinfachtes Blockschaltbild der erfindungsgemäßen Anordnung und
- Figur 2: ein Beispiel für den Vergleich des aktuellen Messvektors mit dem korrespondierenden Vektor der Soll-Trajektorie.

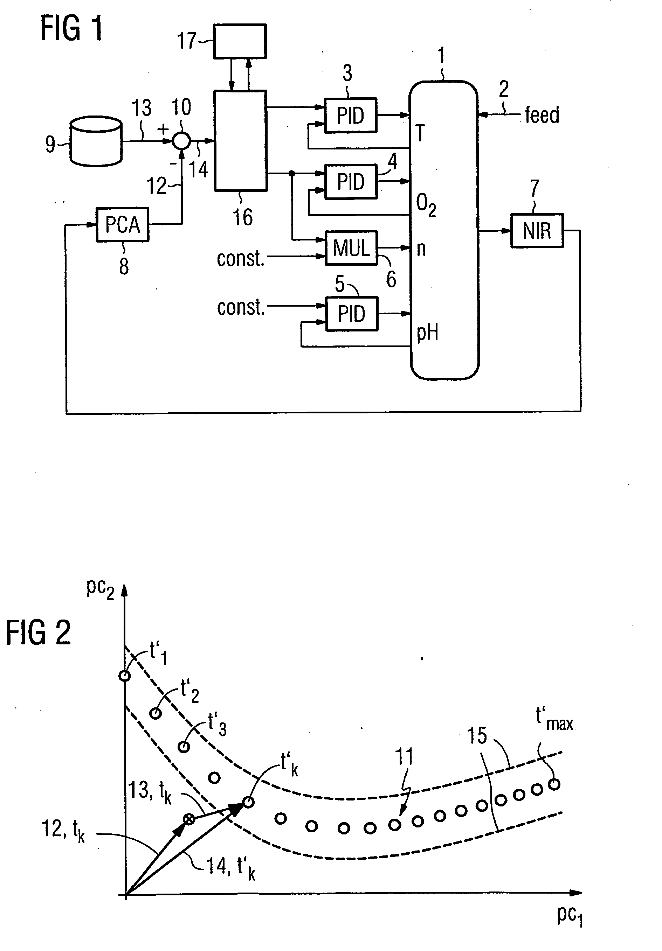

Figur 1 zeigt einen Bioreaktor 1, in dem zu Beginn des Batch-Prozesses zugeführte Rohstoffe (feed) 2 mit Hilfe von Mikroorganismen in ein gewünschtes Produkt in gewünschter Qualität umgewandelt werden. Während des Batch-Prozesses werden durch Stelleingriffe in den Prozess optimale Umgebungsbedingungen für die Mikroorganismen geschaffen. Die Stelleingriffe werden mittels konventioneller Steuereinrichtungen in Form von offenen Steuerungen oder geschlossenen Regelkreisen durchgeführt. Bei dem gezeigten Ausführungsbeispiel werden die Temperatur T und die Sauerstoffzufuhr O₂ mit Hilfe von PID-Reglern 3 und 4 sollwertabhängig geregelt, während der pH-Wert mittels eines weiteren PID-Reglers 5 auf einen konstanten Wert geregelt wird. Die Drehzahl n für ein hier nicht gezeigtes Rührwerk in dem Bioreaktor 1 kann proportional zur Sauerstoffzufuhr gesteuert werden, wozu in einem Multiplizierer 6 der Sollwert für die Regelung der Sauerstoffzufuhr mit einem Faktor multipliziert wird.

Die Stelleingriffe erfolgen hier nicht wie bisher aufgrund von Erfahrungswerten, sondern im Rahmen einer Online-Regelung aufgrund des tatsächlichen Prozessverlaufs, der im Sinne eines Fingerabdrucks identifiziert wird. Dazu werden mittels eines NIR-Spektrometers 7 zu regelmäßig aufeinander folgenden Zeitpunkten tₖ, k = 1 ... max, Spektren der Charge im Reaktor 1 im nahen Infrarotbereich aufgenommen. Zur Komprimierung der Datenmenge ohne Informationsverlust wird jedes aufgenommene hochdimensionale Spektrum in einer Einrichtung 8 durch Hauptkomponentenanalyse in einen Messvektor in einem niederdimensionalen Hauptkomponentenraum transformiert. Die zu allen Zeitpunkten t₁ bis tₘₐₓ erzeugten Messvektoren bilden eine Ist-Trajektorie, also eine für den Verlauf des Batch-Prozesses typische Kurve, die daher als Fingerabdruck des Prozesses angesehen werden kann. Die Trajektorie eines früheren optimal verlaufenen Batch-Prozesses, in dem das betreffende Produkt in bester Qualität erzeugt worden ist, ist als Soll-Trajektorie in einem Datenspeicher 9 abgelegt. In einer Vergleichseinrichtung 10 werden zu jedem Zeitpunkt tₖ der aktuelle Messvektor 12 der Ist-Trajektorie und der zugehörige Vektor 14 der Soll-Trajektorie miteinander verglichen, wobei eine Abweichung 13 zwischen beiden Vektoren 12, 14 auf einen nicht optimalen Verlauf des aktuellen Prozesses hinweist.

Figur 2 zeigt beispielhaft eine in einem zweidimensionalen Hauptkomponentenraum mit den Hauptkomponenten pc₁ und pc₂ verlaufende Soll-Trajektorie 11, welche aus den Spitzen der in dem früheren, optimal verlaufenen Prozess zu den damaligen Zeitpunkten t'₁ bis t'ₘₐₓ erzeugten Messvektoren besteht. Für den aktuellen Batch-Prozess sind beispielhaft der zum Zeitpunkt tₖ erzeugte Messvektor 12 und seine Abweichung 13 zu dem korrespondierenden Vektor 14 der Soll-Trajektorie 11 dargestellt. Um die Soll-Trajektorie 11 ist ein Korridor 15 festgelegt, innerhalb dessen Abweichungen 13 des aktuellen Messvektors 12 von dem korrespondierenden Vektor 14 der Soll-Trajektorie 11 als unerheblich angesehen werden. Liegt der aktuelle Messvektor 14 mit seiner Spitze außerhalb des Korridors 15, so ist ein korrigierender Stelleingriff in den Batch-Prozess erforderlich.

Der erforderliche korrigierende Stelleingriff wird in einer Einrichtung 16 ermittelt und hier in Form von Sollwerten den PID-Reglern 3 und 4 zugeführt. Dabei werden die Prozessvariablen T und O₂ zunächst in einer als Startwert vorgegebenen Richtung verändert. Ergibt sich dabei zu dem nachfolgenden Zeitpunkt tₖ₊₁ eine Verringerung der Abweichung 13, werden die Richtung des Stelleingriffs beibehalten und der Stelleingriff zur weiteren Verringerung der Abweichung 13 verstärkt. Ergibt sich dagegen zum Zeitpunkt tₖ₊₁ keine Verringerung der Abweichung 13, so wird die Richtung des Stelleingriffs geändert. Dabei wird nach einem lokalen Suchverfahren, z. B. der Hooke-Jeeves-Methode, vorgegangen.

Um einen geeigneten Startwert möglichst schnell zu finden, werden in einer Optimierungseinrichtung 17 Sequenzen von erfolgreichen, also zu einer Verringerung der Abweichung 13 führenden Stelleingriffen zusammen mit den zugehörigen Messvektoren 12 gespeichert. Während des aktuellen Batch-Prozesses werden die erzeugten Messvektoren 12 auf Übereinstimmung mit denen der abgespeicherten Sequenzen untersucht und in Abhängigkeit davon ein erfolgversprechender Startwert für die Richtung des aktuell erforderlichen Stelleingriffs ermittelt.

## Patentansprüche

1. Verfahren zur Online-Regelung eines Batch-Prozesses in einem Bioreaktor (1), wobei
- Spektren der aktuellen Charge in dem Bioreaktor (1) zu aufeinander folgenden Zeitpunkten (tₖ) während des laufenden Batch-Prozesses aufgenommen werden,
- durch Hauptkomponentenanalyse der hochdimensionalen Spektren für jedes Spektrum ein Messvektor (12) im niederdimensionalen Hauptkomponentenraum erzeugt wird,
- die Abweichung (13) zwischen dem Messvektor (12) und einem korrespondierenden Vektor (14) einer Soll-Trajektorie (11), die aus in einem früheren Batch-Prozess ermittelten Messvektoren einer Referenzcharge besteht, ermittelt wird,
- in Abhängigkeit von der Abweichung (13) mindestens ein Stelleingriff für den Batch-Prozess ermittelt wird und
- der mindestens eine Stelleingriff in den Batch-Prozess durchgeführt wird,
- wobei die Richtung des Stelleingriffs beibehalten wird, wenn die von einem Zeitpunkt (tₖ) auf den anderen Zeitpunkt (tₖ₊₁) ermittelte Abweichung (13) geringer wird, und die Richtung des Stelleingriffs geändert wird, wenn die von einem Zeitpunkt (tₖ) auf den anderen Zeitpunkt (tₖ₊₁) ermittelte Abweichung (13) gleich bleibt oder größer wird.

2. Verfahren nach Anspruch 1, **dadurch gekennzeichnet, dass** die Richtung des Stelleingriffs mittels eines lokalen Suchverfahrens, insbesondere des Hooke-Jeeves-Verfahrens, ermittelt wird.

3. Verfahren nach Anspruch 1 oder 2, **dadurch gekennzeichnet, dass** bei von einem Zeitpunkt (tₖ) auf den anderen Zeitpunkt (tₖ₊₁) geringer werdender Abweichung (13) die Stärke des Stelleingriffs in Abhängigkeit von der Änderungsgeschwindigkeit der Abweichung (13) eingestellt wird.

4. Verfahren nach einem der vorangehenden Ansprüche, **dadurch gekennzeichnet, dass** Sequenzen von zu einer Verringerung der Abweichung (13) führenden Stelleingriffen zusammen mit den zugehörigen Messvektoren (12) gespeichert werden, dass während des aktuellen Batch-Prozesses die erzeugten Messvektoren (12) auf Übereinstimmung mit denen der abgespeicherten Sequenzen untersucht werden und dass in Abhängigkeit davon Startwerte für die Richtung des Stelleingriffes ermittelt werden.

5. Anordnung zur Online-Regelung eines Batch-Prozesses in einem Bioreaktor (1)
- mit einem NIR-Spektrometer (7) zur Aufnahme von Spektren der aktuellen Charge in dem Bioreaktor (1) zu aufeinander folgenden Zeitpunkten (tₖ) während des laufenden Batch-Prozesses,
- mit einer Einrichtung (8) zur Hauptkomponentenanalyse der hochdimensionalen Spektren und zur Erzeugung eines Messvektors (12) für jedes Spektrum im niederdimensionalen Hauptkomponentenraum,
- mit einer Einrichtung (10) zur Ermittlung der Abweichung (13) zwischen dem Messvektor (12) und einem korrespondierenden Vektor (14) einer Soll-Trajektorie (11), die aus in einem früheren Batch-Prozess ermittelten Messvektoren einer Referenzcharge besteht,
- mit einer Einrichtung (16) zur Ermittlung mindestens eines Stelleingriffs für den Batch-Prozess in Abhängigkeit von der Abweichung (13) und
- mit mindestens einer Steuereinrichtung (3, 4, 6) zur Durchführung des mindestens einen Stelleingriffs in den Batch-Prozess,
- wobei die Richtung des Stelleingriffs beibehalten wird, wenn die von einem Zeitpunkt (tₖ) auf den anderen Zeitpunkt (tₖ₊₁) ermittelte Abweichung (13) geringer wird, und wobei die Richtung des Stelleingriffs geändert wird, wenn die von einem Zeitpunkt (tₖ) auf den anderen Zeitpunkt (tₖ₊₁) ermittelte Abweichung (13) gleich bleibt oder größer wird.

6. Anordnung nach Anspruch 5, **dadurch gekennzeichnet, dass** die Einrichtung (16) dazu ausgebildet ist, die Richtung des Stelleingriffs mittels eines lokalen Suchverfahrens, insbesondere des Hooke-Jeeves-Verfahrens, zu ermitteln.

7. Anordnung nach Anspruch 5 oder 6, **dadurch gekennzeichnet, dass** die Einrichtung (16) dazu ausgebildet ist, bei von einem Zeitpunkt (tₖ) auf den anderen Zeitpunkt (tₖ₊₁) geringer werdender Abweichung die Stärke des Stelleingriffs in Abhängigkeit von der Änderungsgeschwindigkeit der Abweichung (13) einzustellen.

8. Anordnung nach einem der Ansprüche 5 bis 7, **dadurch gekennzeichnet, dass** eine Optimierungseinrichtung (17) vorhanden ist, die Sequenzen von zu einer Verringerung der Abweichung (13) führenden Stelleingriffen zusammen mit den zugehörigen Messvektoren (12) speichert, während des aktuellen Batch-Prozesses die erzeugten Messvektoren (12) auf Übereinstimmung mit denen der abgespeicherten Sequenzen untersucht und in Abhängigkeit davon Startwerte für die Richtung des Stelleingriffes ermittelt.

## Claims

1. Method for online regulation of a batch process in a bioreactor (1), with
- spectra of the current batch in the bioreactor (1) being recorded at consecutive points in time (tₖ) during the course of the batch process,
- a measuring vector (12) being created for each spectrum in the low-dimensional primary component region through primary component analysis of the high-dimensional spectra,
- the deviation (13) between the measuring vector (12) and a corresponding vector (14) of a nominal trajectory (11) which consists of measuring vectors of a reference batch determined in an earlier batch process, being determined,
- depending on the deviation (13), at least one adjustment operation for the batch process being determined and
- the at least one adjustment operation being executed in the batch process,
- with the direction of the adjustment operation being retained if the deviation (13) determined from one point in time (tₖ) to the other point in time (tₖ₊₁) is lower, and the direction of the adjustment operation being changed if the deviation (13) determined from one point in time (tₖ) to the other point in time (tₖ₊₁) remains the same or is higher.

2. Method according to claim 1, **characterized in that** the direction of the adjustment operation is determined by means of a local search method, especially the Hooke-Jeeves method.

3. Method according to claim 1 or 2, **characterized in that**, for a deviation (13) which becomes lower from one point in time (tₖ) to the other point in time (tₖ₊₁), the strength of the adjustment operation is set as a function of the speed of change of the deviation (13).

4. Method according to one of the previous claims, **characterized in that** sequences of adjustment operations leading to a reduction of the deviation (13) are stored along with the associated measuring vectors (12), that during the current batch processes the created measuring vectors (12) are investigated to see if they match those of the stored sequences, and that, depending on the result, start values are determined for the direction of the adjustment operation.

5. Arrangement for online regulation of a batch processes in a bioreactor (1)
- with an NIR mass spectrometer (7) for recording spectra of the current batch in the bioreactor (1) at consecutive points in time (tₖ) during the ongoing batch process,
- with a device (8) for primary component analysis of the high-dimensional spectra and for creating a measuring vector (12) for each spectrum in the low-dimensional primary component region,
- with a device (10) for determining the deviation (13) between the measuring vector (12) and a corresponding vector (14) of a nominal trajectory (11) which consists of the measuring vector of a reference batch determined from an earlier batch process,
- with a device (16) for determining at least one adjustment operation for the batch process depending on the deviation (13) and
- with at least one control device (3, 4, 6) for executing the at least one adjustment operation in the batch process,
- with the direction of the adjustment operation being retained if the deviation (13) determined from one point in time (tₖ) to the other point in time (tₖ₊₁) is lower, and with the direction of the adjustment operation being changed if the deviation (13) determined from one point in time (tₖ) to the other point in time (tₖ₊₁) remains the same or is higher.

6. Arrangement according to claim 5, **characterized in that** the device (16) is embodied for determining the direction of the adjustment operation by means of a local search method, especially the Hooke-Jeeves method.

7. Arrangement according to claim 5 or 6, **characterized in that** the device (16) is embodied, for a deviation which reduces from one point in time (tₖ) to the other point in time (tₖ₊₁), to set the strength of the adjustment operation depending on the speed of change of the deviation (13).

8. Arrangement according to claim 5 to 7, **characterized in that** an optimization device (17) is present, which stores sequences of adjustment operations leading to a reduction of the deviation (13) together with the associated measuring vector (12), investigates the created measuring vectors (12) during of the current batch process to see if they match those of the stored sequences and determines start values for the direction of the adjustment operation as a function thereof.

## Revendications

1. Procédé de réglage en ligne d'un procédé Batch ou par lot dans un bioréacteur (1), procédé dans lequel
- on enregistre des spectres de la charge actuelle se trouvant dans le bioréacteur (1) à des instants successifs (tₖ) pendant le processus Batch en cours,
- en analysant la composante principale des spectres de dimension élevée, on génère pour chaque spectre un vecteur de mesure (12) dans l'espace de plus faible dimension de la composante principale,
- on détermine l'écart (13) entre le vecteur de mesure (12) et un vecteur correspondant (14) d'une trajectoire de consigne (11) qui est constituée de vecteurs de mesure d'une charge de référence qui sont déterminés dans un processus Batch antérieur,
- on effectue au moins un réglage du processus Batch en fonction de l'écart (13), et
- on effectue l'au moins un réglage du processus Batch,
- le sens du réglage étant conservé si l'écart (13) déterminé entre un instant (tₖ) et un autre instant (tₖ₊₁) diminue et le sens de l'intervention de réglage est modifié si l'écart (13) déterminé entre un instant (tₖ) et un autre instant (tₖ₊₁) reste constant ou augmente.

2. Procédé selon la revendication 1, **caractérisé en ce que** le sens du réglage est déterminé au moyen d'un procédé de recherche locale, notamment un procédé de Hooke-Jeeves.

3. Procédé selon la revendication 1 ou 2, **caractérisé en ce que**, lorsque l'écart (13) obtenu entre un instant (tₖ) et un autre instant (tₖ₊₁) diminue, l'intensité du réglage est réglée en fonction de la vitesse de variation de l'écart (13).

4. Procédé selon l'une des revendications précédentes, **caractérisé en ce que** des séquences de réglage entraînant une diminution de l'écart (13) sont mémorisées conjointement avec les vecteurs de mesure associés (12), **en ce que** les vecteurs de mesure générés (12) sont analysés pendant le processus Batch en cours afin de rechercher ceux qui coïncident avec les séquences en mémoire et **en ce que** l'on détermine à partir de là des valeurs de départ pour le sens du réglage.

5. Système de réglage en ligne d'un processus Batch dans un bioréacteur (1), ledit dispositif comportant
- un spectromètre NIR (7) destiné à enregistrer des spectres de la charge actuelle se trouvant dans le bioréacteur (1) à des instants successifs (tₖ) pendant le processus Batch en cours,
- un dispositif (8) destiné à analyser la composante principale des spectres de dimension élevée et générer pour chaque spectre un vecteur de mesure (12) dans l'espace de plus faible dimension de la composante principale,
- un dispositif (10) permettant de déterminer l'écart (13) entre le vecteur de mesure (12) et un vecteur correspondant (14) d'une trajectoire de consigne (11) qui est constituée de vecteurs de mesure d'une charge de référence qui sont déterminés dans un processus Batch antérieur,
- un dispositif (16) destiné à effectuer au moins un réglage du processus Batch en fonction de l'écart (13) et
- au moins un dispositif de commande (3, 4, 6) destiné à effectuer l'au moins un réglage du processus Batch,
- le sens du réglage étant conservé si l'écart (13) déterminé entre un instant (tₖ) et un autre instant (tₖ₊₁) diminue et le sens de l'intervention de réglage est modifié si l'écart (13) déterminé entre un instant (tₖ) et un autre instant (tₖ₊₁) reste constant ou augmente.

6. Système selon la revendication 5, **caractérisé en ce que** le dispositif (16) est conformé de façon à déterminer le sens du réglage au moyen d'un procédé de recherche locale, notamment un procédé de Hooke-Jeeves.

7. Système selon la revendication 5 ou 6, **caractérisé en ce que** le dispositif (16) est conformé de façon à régler l'intensité du réglage en fonction de la vitesse de variation de l'écart (13) lorsque l'écart (13) obtenu entre un instant (tₖ) et un autre instant (tₖ₊₁) diminue.

8. Système selon l'une des revendications 5 à 7, **caractérisé en ce qu'**il est prévu un dispositif d'optimisation (17) qui mémorise des séquences de réglage, entraînant une diminution de l'écart (13), conjointement avec les vecteurs de mesure associés (12), qui analyse les vecteurs de mesure générés (12) pendant le processus Batch en cours afin de rechercher ceux qui coïncident avec les séquences en mémoire et qui détermine en fonction de cela des valeurs de départ pour le sens du réglage.
